# EUROPÄISCHE PATENTSCHRIFT

(11) **EP 2 707 159 B1**
(45) Veröffentlichungstag und Bekanntmachung des Hinweises auf die Patenterteilung: **17.06.2015**
(21) Anmeldenummer: 12730359.2
(22) Anmeldetag: 08.05.2012
(51) Int. Cl.: B21D 5/00, B21D 5/02, B21D 43/26, B21D 55/00, F16P 3/12

(54) **BIEGEPRESSE MIT ANSCHLAGVORRICHTUNG UND VERFAHREN ZUM BETRIEB EINER BIEGEPRESSE MIT ANSCHLAGVORRICHTUNG**
BENDING PRESS WITH BACK GAUGE DEVICE AND METHOD FOR OPERATING A BENDING PRESS HAVING A BACK GAUGE DEVICE
PRESSE PLIEUSE AVEC DISPOSITIF DE BUTÉE ARRIÈRE ET SON PROCÉDÉ DE FONCTIONNEMENT

(30) Priorität: 09.05.2011 AT 6502011
(43) Veröffentlichungstag der Anmeldung: 19.03.2014
(73) Patentinhaber: TRUMPF Maschinen Austria GmbH & Co. KG., 4061 Pasching (AT)
(72) Erfinder: FISCHEREDER, Bernhard, A-4870 Vöcklabruck (AT); SPERRER, Gerhard, A-4554 Oberschlierbach (AT)
(74) Vertreter: Burger, Hannes
(86) Internationale Anmeldenummer: PCT/AT2012/050063
(87) Internationale Veröffentlichungsnummer: WO 2012/151600

(56) Entgegenhaltungen:
- DE-C1- 3 739 949
- JP-A- 9 253 753

## Beschreibung

Die Erfindung betrifft ein Verfahren zum Betrieb einer Biegepresse gemäß Oberbegriff des Anspruches 1 sowie eine Biegepresse gemäß Oberbegriff des Anspruches 13.

Zur Unterstützung eines Bedieners beim positionsgenauen Einlegen von Werkteilen in Bezug auf die durch die Biegewerkzeuge definierte Biegeebene, sind Biegepressen häufig mit einer Werkteil-Positioniervorrichtung ausgestattet, die eine oder mehrere Anschlagvorrichtungen mit einer Anschlagfläche aufweisen, gegen die ein Werkteil vom Bediener angeschlagen wird. Damit unterschiedliche Biegeschenkellängen ohne manuelle Umrüstvorgänge der Anschlagvorrichtung hergestellt werden können, sind die Anschlagflächen vorteilhafterweise an CNC-gesteuerten Anschlagfingern ausgebildet. Bei den Verstellbewegungen der Anschlagfinger kann für einen Bediener eine Verletzungsgefahr bestehen, wenn die Anschlagfläche für kurze Biegeschenkellängen sehr nahe an das Unterwerkzeug, auf dem ein Werkteil abgelegt wird, angenähert wird, da in diesem Fall die Finger eines Bedieners zwischen dem Anschlagfinger und dem Unterwerkzeug, einem darauf bereits vorpositionierten Werkteil oder einem sonstigen Hindernis eingeklemmt werden könnten.

Zur Vermeidung von daraus resultierenden Quetschverletzungen, existieren Lösungen, bei denen die Bewegungsgeschwindigkeit eines Anschlagfingers in einem Annäherungsbereich nahe der Biegeebene bzw. nahe am Unterwerkzeug, einem darauf vorpositionierten Werkteil, einem sonstigen feststehenden Bauteil der Biegepresse oder einem sonstigen Hindernis stark reduziert wird oder bei einer Annäherung unter einen vorgegebenen Sicherheitsabstand, beispielsweise weniger als 100 mm zur Biegeebene, die Annäherungsbewegung unterbrochen wird und von dem Bediener eigens freigegeben werden muss. In beiden Fällen erfolgt die Positionierung der Anschlagfinger in der Anschlagposition verzögert und reduziert sich dadurch die Produktivität bei der Arbeit an einer solchen Biegepresse.

Die Aufgabe der Erfindung besteht darin, ein Verfahren zum Betrieb einer Biegepresse bereitzustellen, bei dem die Positionierbewegung eines Anschlagfingers mit hoher Geschwindigkeit und trotzdem ohne Erhöhung der Verletzungsgefahr für eine Bedienperson erfolgen kann. Eine weitere Aufgabe der Erfindung besteht darin, eine Biegepresse bereitzustellen, mit der das erfindungsgemäße Verfahren ausführbar ist.

Die Aufgabe der Erfindung wird durch ein Verfahren mit den Maßnahmen des Anspruches 1 bzw. eine Biegepresse mit den Merkmalen des Anspruches 13 gelöst, wobei die Sensoranordnung die Annäherung des Anschlagfingers in die Anschlagposition überwacht und im Fall einer möglicherweise gefahrbringenden Kollision die Annäherungsbewegung nicht nur abgestoppt sondern zusätzlich unverzüglich eine ruckartige Rückzugbewegung eingeleitet wird. Der dazu aktivierte Rückzugantrieb sorgt für entsprechend hohe Beschleunigungswerte im Bewegungsablauf des Anschlagfingers bzw. von dessen Endabschnitt.

Diese zusätzlich ausgeführte Rückzugbewegung bewirkt, dass ein durch den Kontakt mit dem Anschlagfinger überraschter Bediener, der den betreffenden Körperteil reflexartig und ruckartig, also mit großer Beschleunigung und hoher Bewegungsgeschwindigkeit zurückzieht, nicht der Gefahr ausgesetzt ist, dass am Körperteil durch diese Ausweichbewegung Verletzungen durch scharfkantige Teile des abgestoppten Anschlagfingers verursacht werden. Um auch dünne Werkteile an den Anschlagflächen anschlagen zu können, sind diese häufig sehr scharfkantig ausgeführt, damit ein eingelegtes Werkteil nicht unabsichtlich durch Anfasungen oder Abrundungen der Anschlagfläche nach oben oder unten ausweicht und über die Anschlagfläche hinaus positioniert wird. Durch die erfindungsgemäße Rückzugbewegung des Anschlagfingers werden Ausreißverletzungen oder Schnittverletzungen durch reflexartiges Zurückziehen von Körperteilen wirksam verhindert.

Eine erfindungsgemäße Biegepresse reduziert die Verletzungsgefahr für eine Bedienperson, da die Annäherungsbewegung durch die Sensoranordnung ständig auf ein mögliches Kollisionsrisiko überwacht oder eine eintretende Kollision unverzüglich erfasst wird und der Anschlagfinger nicht nur gestoppt wird, sondern unverzüglich einer Rückzugbewegung unterworfen wird und die Gefahr für Ausreißverletzungen oder Schnittverletzungen an den von einer Bedienperson reflexartig zurückgezogenen Körperteilen wesentlich reduziert bzw. beseitigt wird.

Um eine hohe Dynamik der Rückzugbewegung zu erzielen ist es von Vorteil, wenn gemäß Anspruch 2 die Rückzugbewegung im Wesentlichen auf den Anschlagfinger oder dessen Endabschnitt beschränkt wird, wodurch geringere Massen abgebremst und in Gegenrichtung beschleunigt werden müssen, und daraus geringere Anforderungen für den Rückzugantrieb resultieren. Der Anschlagfinger kann also auch mehrteilig ausgeführt sein, und im Fall einer Aktivierung der Rückzugbewegung wird nur der der Biegeebene benachbarte Endabschnitt ruckartig zurückgezogen. Durch diese Maßnahme wird die Masse, die im Rückzugfall bewegt werden muss minimiert, und können dadurch auch mit relativ geringen Antriebsleistungen des Rückzugantriebs hohe Beschleunigungen und hohe Verfahrgeschwindigkeiten des Anschlagfingers bewerkstelligt werden.

Falls die für die Positionierung des Anschlagfingers ohnedies vorhandenen CNC-Achsen mit ihren entsprechenden Antrieben eine ausreichende ruckartige Rückzugbewegung des Anschlagfingers bewirken können, ist es von Vorteil wenn gemäß Anspruch 3 oder Anspruch 16 diese gleichzeitig als Rückzugantrieb dient oder zumindest einen Teil desselben bildet. Die Rückzugbewegung besteht vorrangig in einer Vergrößerung des Abstandes des Anschlagfingers zur Biegeebene, weshalb hier die in horizontaler X-Achsrichtung wirksamen CNC-Achsen aktiviert werden.

CNC-Achsen im Sinn dieser Anmeldung umfassen dabei entsprechende Führungselemente zur Führung von Relativbewegungen, Aktuatoren zum Aufbringen der erforderlichen Verstellkräfte und Funktionen der Steuereinrichtung, mit denen die Verstellbewegungen programmgesteuert und geregelt ablaufen können.

Um die Dynamik der Rückzugbewegung weiter zu erhöhen, ist es gemäß Anspruch 4 und Anspruch 20 möglich, von der Steuereinrichtung ein auf den Anschlagfinger wirkendes Zusatzantriebsmittel zu aktivieren. Dieses kann eine für die Rückzugbewegung aktivierte CNC-Achse unterstützen oder ersetzen. Weiters kann die Rückzugbewegung auch nur den vordersten Teil des Anschlagfingers betreffen, der bei Auslösung der Rückzugbewegung vom Rest des Anschlagfingers entkoppelt wird, und von der Antriebsanordnung für die Positionierung des Anschlagfingers und/oder dem Zusatzantriebsmittel im Bedarfsfall zurückgezogen wird. Durch ein derartiges Zusatzantriebsmittel kann eine schnelle Rückzugbewegung erzielt werden, auch wenn die Dynamik des Positionierantriebs für den Anschlagfinger dafür nicht ausreichen sollte. Deshalb ist auch eine Nachrüstung bestehender Anschlagvorrichtungen möglich, indem für den Rückzugantrieb nachträglich ein Zusatzantriebsmittel vorgesehen wird. Da das Zusatzantriebsmittel nur im Auslösefall aktiviert werden muss, also im Normalbetrieb nur selten aktiviert werden muss, kann dieses gemäß Anspruch 21 die für die Rückzugbewegung gespeicherte Bewegungsenergie in verschiedenen Formen speichern, wie beispielsweise in Form einer pyrotechnischen Treibladung, einer mechanisch vorgespannten Feder, einer Gasfeder usw. Die genannten Möglichkeiten für ein Zusatzantriebsmittel stellen zuverlässig wirkende Lösungen für die Sicherstellung einer schnellen Rückzugbewegung dar.

Eine mögliche Ausführungsform der Sensoranordnung besteht nach Anspruch 5 und Anspruch 14 darin, dass das Hindernis durch ein am Anschlagfinger angeordnetes Sensorelement in Form eines mechanisch betätigbaren Kontaktschalters, eines Kraftmesselements oder eines berührungslos wirkenden Näherungssensors erfasst wird. Als berührungslose Sensoren können dabei kapazitive, induktive, optische Näherungsschalter eingesetzt werden. Weiters ist auch die Verwendung von Objekterkennung auf optischer Basis oder Strukturerkennung möglich, bei denen die Bewegungsbahn des Anschlagfingers mittels zumindest einer Kamera und einem mit der Steuereinrichtung verbundenen Objekterkennungssystem oder Strukturerkennungssystem auf das Vorhandensein von Hindernissen überprüft wird. Die Anordnung am Anschlagfinger stellt sicher, dass ein Hindernis unabhängig von der bei der Annäherungsbewegung vorliegenden Bewegungsbahn des Anschlagfingers erfasst wird. Das Sensorelement ist dazu am Anschlagfinger vorteilhafterweise so angeordnet, dass seine Erfassungsrichtung in Richtung des wahrscheinlichsten Ortes eines möglichen Hindernisses weist.

Eine weitere Ausführungsform besteht darin, dass die Sensoranordnung gemäß Anspruch 6 bzw. Anspruch 15 einen Kraft-Regelkreises der Steuereinrichtung umfasst. Durch die zusätzliche Überlagerung der Positionssteuerung mit einer Regelung der Verstellkraft über den Kraft-Regelkreis können auch sehr schnelle Verstellvorgänge und Annäherungsbewegungen trotzdem sehr feinfühlig ausgeführt werden und wird, sobald der Anschlagfinger auf ein unvorhergesehenes Hindernis trifft, die Annäherungsbewegung innerhalb kürzester Zeit umgekehrt und der Anschlagfinger vom Hindernis zurückgezogen. Diese Kraft-Regelung kann zusätzlich zu einem Sensorelement am Anschlagfinger vorgesehen sein, wodurch eine die Bedienersicherheit weiter erhöhende Redundanz für die Erfassung eines Hindernisses bewirkt wird.

Die von einem Antriebsmotor der Positionierantriebe auf einen Anschlagfinger ausgeübte Verstellkraft kann im Verlauf der Annäherungsbewegung in die Anschlagposition mit einem vorprogrammierten Verstellkraftverlauf angesteuert werden und kann beispielsweise durch Messung der Stromaufnahme des Antriebsmotors oder der Antriebsmotoren eine Abweichung, insbesondere ein Anstieg der zur Erreichung der Anschlagposition notwendigen Verstellkraft unverzüglich festgestellt und die Rückzugbewegung des Anschlagfingers ausgelöst werden. Die Festlegung des Verstellkraftverlaufes berücksichtigt dabei vorzugsweise die Reibung des Anschlagfingers in den Linearführungen am Fingerträger und die bei Verzögerungen oder Beschleunigungen des Anschlagfingers auftretenden Trägheitskräfte aufgrund der Masse des Anschlagfingers. Der beispielsweise mittels eines Servomotors angetriebene Anschlagfinger kann schnelle dynamische Positionierbewegungen ausführen und durch die Kraftregelung trotzdem feinfühlig unverzüglich auf unvorhergesehene Hindernisse reagieren.

Der Verstellkraftverlauf kann dabei abschnittsweise konstant sein oder auch stetig oder kontinuierlich variabel sein. Der Auslösewert kann so festgelegt sein, dass eine Überschreitung des programmierten Verstellkraftverlaufes um einen bestimmten Prozentsatz oder um einen fixen Betrag die Auslösung der Rückzugbewegung einleitet.

Eine weitere Erhöhung der Benutzersicherheit wird bei einer Durchführung des Verfahrens gemäß Anspruch 7 erzielt. Um die auf einem Körperteil des Benutzers ausgelegten Kräfte im Kontaktfall bzw. Kollisionsfall zu minimieren, ist es förderlich, wenn die bewegten Massen der Anschlagvorrichtung möglichst gering sind und die bei Auslösung der Rückzugbewegung aktivierten CNC-Achsen des Positionierantriebs bzw. die dabei verwendeten Antriebsmotoren hohe Antriebs- und Bremsmomente ausüben können. Die dabei vorzusehende Verstellkraft ist abhängig von der Dynamik des Antriebs, den bewegten Massen, der Antriebsleistung bzw. Bremsleistung der zweiten Antriebsanordnung, usw. Die tatsächlich wirkende Kraft kann etwa durch Messung festgestellt werden, indem eine Anfahrbewegung mit Kollision an einem Kraftmessgerät durchgeführt wird.

Die Ausführung des Verfahrens gemäß Anspruch 8 bewirkt, dass der Anschlagfinger außerhalb des Annäherungsbereiches, in dem eine Gefährdung einer Bedienperson stattfinden kann, mit hoher Verstellkraft und damit zusammenhängend auch mit hoher Positioniergeschwindigkeit, also zeitsparend bewegt kann. Vorzugsweise wird außerhalb des Annäherungsbereiches die volle Leistungsfähigkeit der Antriebsanordnung der Anschlagvorrichtung bzw. der CNC-Achsen ausgenützt.

Eine Festlegung des Annäherungsbereiches gemäß Anspruch 9 bewirkt, dass dieser für viele Anwendungsfälle ausreichend groß ist und die am meisten gefährdeten Finger einer Bedienperson keiner Quetschgefahr zwischen Anschlagfinger und Unterwerkzeug ausgesetzt sind.

Die Verwendung der an dem zumindest einen für die Annäherungsbewegung aktiven CNC-Achsantrieb wirkenden Stromstärke als Vergleichswert für die aktuell wirkende Verstellkraft gemäß Anspruch 10 ermöglicht es, den Kontakt mit einem Hindernis ohne eine zusätzliche Kraftmesseinrichtung festzustellen und die Rückzugbewegung auszulösen.

Durch die Ausführung des Verfahrens gemäß Anspruch 11 mit einer sehr schnellen Einleitung der Rückzugbewegung von der Biegeebene weg, ist auch bei sehr reaktionsschnellen Bedienpersonen die Gefahr für Verletzungen beim Zurückziehen eines Körperteiles ausgeschaltet. Der Anschlagfinger besitzt durch die Sensoranordnung und den hochdynamischen Rückzugantrieb gewissermaßen eine kürzere Reaktionszeit als der Bediener und hat schon einen Teil der Rückzugbewegung ausgeführt, bevor eine Bedienperson überhaupt den Kontakt mit dem Anschlagfinger realisieren und darauf reflexartig reagieren kann.

Die Ausführung gemäß Anspruch 12 stellt sicher, dass sich der Anschlagfinger innerhalb kürzester Zeit in einem ausreichenden Abstand zum Körperteil des Bedieners befindet, wodurch dieser beim Zurückziehen des Körperteiles sich an scharfen Kanten des Anschlagfingers nicht mehr verletzen kann. Je größer der unmittelbar nach dem erfassten Kontakt zurückgelegte Rückzugweg des Anschlagfingers ist, umso weniger Gefahr für den Bediener besteht, auch wenn die Reflexbewegung in einer unvorhergesehenen oder unerwarteten Richtung erfolgen sollte.

Eine vorteilhafte Ausführungsform der Biegepresse besteht gemäß Anspruch 17 darin, dass der Anschlagfinger verstellbar an einem Fingerträger gelagert ist und die in X-Achsrichtung wirkende CNC-Achse des Rückzugantriebes am Fingerträger angeordnet ist, weil dadurch die bei einer Rückzugbewegung zu beschleunigende Masse minimiert wird. Zusätzlich kann der Fingerträger, der selbst mittels einer weiteren CNC-Achse in X-Achsrichtung verstellbar sein kann, zur Rückzugbewegung beitragen, indem die entsprechende weitere CNC-Achse aktiviert wird. Die Rückzugbewegung kann weiters eine Bewegungskomponente in senkrechter R-Achsrichtung umfassen, insbesondere wenn auch die Annäherungsbewegung eine Vertikalkomponente enthält. Weiters kann es von Vorteil sein, wenn die Rückzugbewegung eine Umkehrung der Annäherungsbewegung darstellt, wobei die Bewegungsgeschwindigkeit der Rückzugbewegung wesentlich höher sein kann, als die der Annäherungsbewegung.

Die Ausführung der Biegepresse gemäß Anspruch 19 ist vorteilhaft, da durch einen Verstellbereich des Anschlagfingers von zumindest 200 mm, die bei kleinen und mittelgroßen Werkteilen auftretenden Biegeschenkellängen mit hoher Bewegungsdynamik abdeckt sind, ohne dass Verfahrbewegungen weiterer Achsen der Anschlagvorrichtung erforderlich sind.

Wird die Anschlagvorrichtung der Biegepresse an ihrer zumindest einen CNC-Achse mit einem Aktuator, insbesondere einem elektrischen Antriebsmotor ausgewählt aus einer Gruppe umfassend Servomotor, Linearmotor ausgestattet ist, sind rasche automatisierte Positionierbewegungen möglich und kann dieser gleichzeitig als Rückzugantrieb wirksam werden.

Die Ausführung der Biegepresse gemäß Anspruch 22 stellt eine sehr hohe Dynamik der Rückzugbewegung sicher, wodurch auch bei Bedienpersonen mit sehr schnellen Reflexen bei einer Kollision der Anschlagfinger aus dem Gefahrenbereich entfernt wird, bevor die Ausweichbewegung der Bedienperson beginnt.

Die Ausführung gemäß Anspruch 23 ergibt ebenfalls eine hohe Dynamik der Rückzugbewegung, wobei der Fachmann in Abhängigkeit von der Masse des Anschlagfingers einen geeigneten Rückzugantrieb auswählen kann, mit dem die angegebenen Werte erreicht werden können.

Eine Ausführung der Biegepresse gemäß Anspruch 24 stellt eine bewährte Lösung dar, mit der auch die erfindungsgemäße Dynamik der Rückzugbewegung realisierbar ist.

Die Ausführung der Biegepresse gemäß Anspruch 25 stellt eine bauliche Lösung für einen Anschlagfinger dar, die eine hohe mechanische Festigkeit und gleichzeitig ein geringes Gewicht zur Erzielung einer hohen Bewegungsdynamik bewirkt.

Zum besseren Verständnis der Erfindung wird diese anhand der nachfolgenden Figuren näher erläutert.

Es zeigen jeweils in stark schematisch vereinfachter Darstellung:
- Fig. 1: eine Ansicht einer Biegepresse mit einer Werkteil-Anschlagvorrichtung gemäß der vorliegenden Erfindung;
- Fig. 2: eine Seitenansicht einer Anschlagvorrichtung mit Darstellung des Verfahrens beim Betrieb der Biegepresse;
- Fig. 3: ein Schema der bei der Verstellung eines Anschlagfingers wirkenden Verstellkräfte bei einer Sensoranordnung in Form eines Kraft-Regelkreises;
- Fig. 4: einen Teilschnitt durch eine Biegepresse mit einer möglichen Ausführungsform der Werkteil-Anschlagvorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

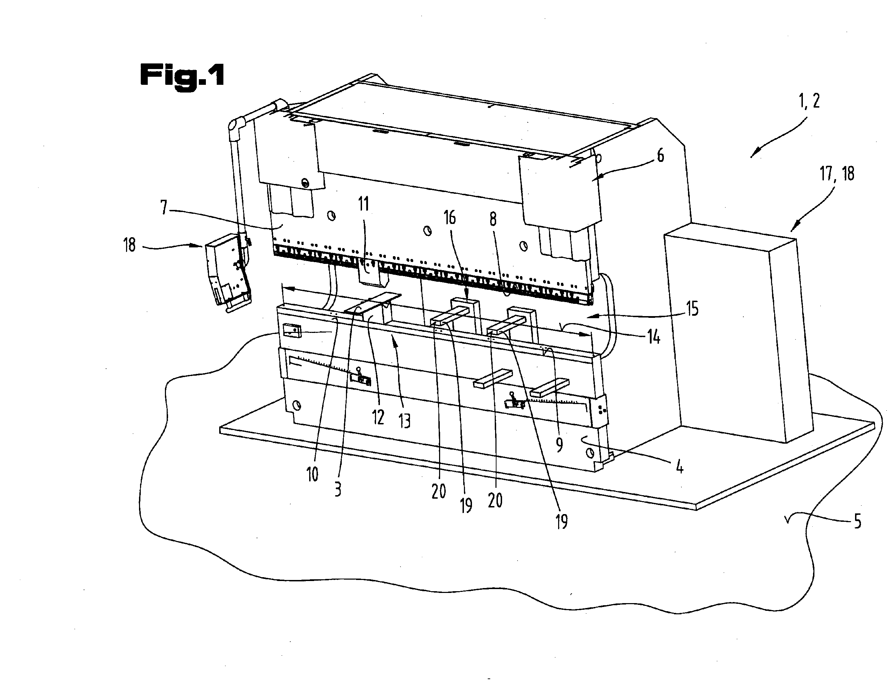

In der Fig. 1 ist eine Biegepresse 1 in Form einer Abkantpresse 2 für eine Biegeumformung von Werkteilen 2 gezeigt.

Die Biegepresse 1 weist einen feststehenden Tischbalken 4, mit zu einer Aufstandsfläche 5 senkrechten Ausrichtung auf und einen relativ dazu durch Antriebsmittel 6, z.B. in Form von Hydraulikzylindern, verstellbaren Pressbalken 7. Auf einer Stirnfläche 8 des Pressbalkens 7 und einer Stirnfläche 9 des Tischbalkens 4 sind in Werkzeugaufnahmen 10 Biegewerkzeuge 11 und 12, etwa in Form eines Biegestempels und eines Biegegesenks, angeordnet.

Im gezeigten Ausführungsbeispiel ist ein aus den Biegewerkzeugen 11, 12 gebildeter Werkzeugsatz 13 vorgesehen, wobei es durchaus möglich ist, auch mehrere der Werkzeugsätze 13 über eine Gesamtlänge 14 des Tischbalkens 4 und Pressbalkens 7 als Werkzeugbestückung vorzusehen, um in Folgeoperationen unterschiedliche Biegevorgänge am Werkteil 3 vornehmen zu können.

In einem Pressenraum 15 ist an einer Rückseite des Tischbalkens 4 zumindest eine Anschlagvorrichtung 16, im dargestellten Ausführungsbeispiel zwei Anschlagvorrichtungen 16 zur Positionierung des Werkteils 3 zwischen den Biegewerkzeugen 11, 12 vorgesehen.

Die Biegepresse 1 und die Anschlagvorrichtung 16 werden von einer zentral angeordneten oder verteilt angeordneten Steuereinrichtung 17 mit Energie und Steuerungssignalen versorgt, wobei weitere Mess- und Regelschaltungen 18, wie Positionssteuerungen, Kraft-Regelkreise usw. in der Steuereinrichtung 17 oder extern an der Anschlagvorrichtung 16 oder integriert in einem Bedienerterminal der Biegepresse 1 mit weiteren Schalt- und Anzeigeelementen vorgesehen sein können.

Die Biegepresse 1 in Fig. 1 zeigt zwei Anschlagvorrichtungen 16, das erfindungsgemäße Verfahren kann jedoch auch bereits mit lediglich einer Anschlagvorrichtung 16 oder auch mit mehr als zwei Anschlagvorrichtungen 16 ausgeführt werden.

Für einen Umformvorgang wird von einer Bedienperson von der Vorderseite der Biegepresse 1 ein Werkteil 3 zwischen die Biegewerkzeuge 11, 12 eingelegt, wobei die Anschlagvorrichtungen 16 CNC-gesteuerte Anschlagfinger 19 in eine Anschlagposition verstellt, in der ein Werkteil 3 von der Bedienperson gegen Anschlagflächen 20 angeschlagen wird und dadurch eine exakt definierte Position in Bezug auf die Biegewerkzeuge 11, 12 einnimmt.

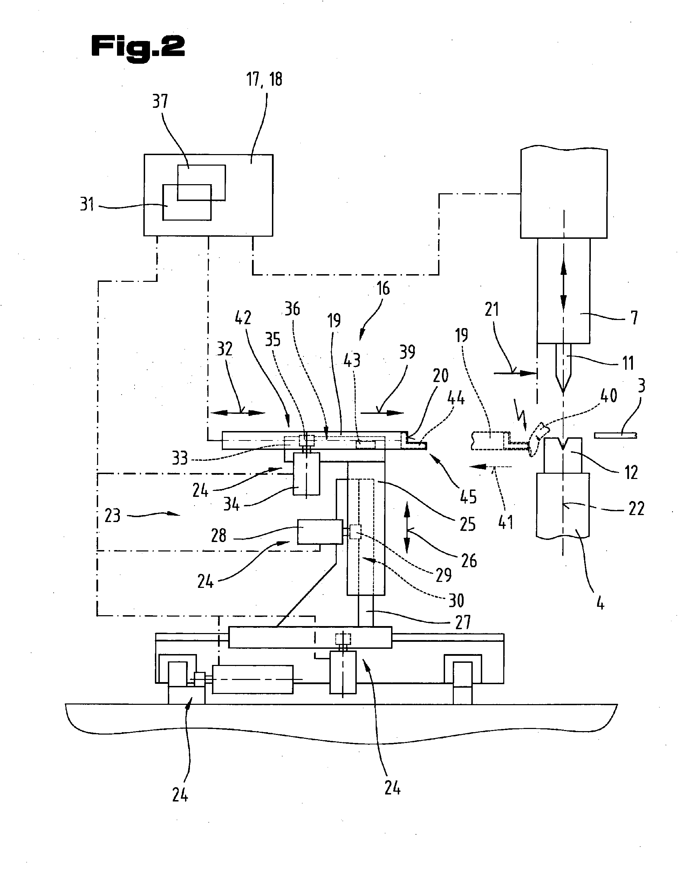

Fig. 2 zeigt in einer Seitenansicht einer Anschlagvorrichtung 16 schematisch die Durchführung des erfindungsgemäßen Verfahrens an einer Biegepresse 1.

Zum positionsgenauen Einlegen eines Werkteiles 3 wird der Anschlagfinger 19 von der Anschlagvorrichtung 16 so verstellt, dass eine Anschlagfläche 20 des Anschlagfingers 19 an einer Anschlagposition 21 positioniert ist. Die Distanz zwischen der Anschlagposition 21 und der Biegeebene 22 bestimmt die Biegeschenkellänge am fertig gebogenen Werkteil 3 und ist demnach für die Herstellung von genauen Biegewerkstücken von großer Bedeutung.

Die Verstellbewegungen und die Positionierung des Anschlagfingers 19 werden durch eine Antriebsanordnung 23 bewirkt, die zumindest eine, im Ausführungsbeispiel mehrere angetriebene CNC-Achsen 24 umfasst. Im dargestellten Ausführungsbeispiel umfasst die Antriebsanordnung 23 einen den Anschlagfinger 19 tragenden Fingerträger 25, der für die Durchführung einer vertikalen Verstellbewegung des Anschlagfingers 19 als vertikale CNC-Achse 24 in der sogenannten R-Achsrichtung 26 entlang einer vertikalen Führungsbahn 27 verstellbar gelagert ist.

Die CNC-Achse 24 in R-Achsrichtung 26 umfasst als Aktuator beispielsweise einen Elektromotor 28, vorzugsweise einen Servomotor, mit einem angeflanschten Zahnritzel 29 und eine damit zusammenwirkende Zahnstangenanordnung 30. Der Elektromotor 28 ist in Fig. 2 mit der feststehenden Führungsbahn 27 verbunden und die Zahnstangenanordnung 30 am Fingerträger 25 angeordnet, während die Zahnstangenanordnung 30 mit der vertikalen Führungsbahn 27 verbunden ist. Selbstverständlich kann der Elektromotor 28 alternativ am Fingerträger 25 angeordnet sein und die Zahnstangenanordnung 30 mit der feststehenden Führungsbahn 27 verbunden sein. Die Ansteuerung der CNC-Achse 24 in R-Achsrichtung 26 bzw. des Elektromotors 28 erfolgt wie in Fig. 2 erkennbar durch die Steuereinrichtung 17, die als CNC-Steuerung ausgeführt ist und eine Positionssteuerung 31 umfasst. Die vertikale Führungsbahn 27 kann, wie in Fig. 2 dargestellt, an ihrer Basis mittels weiterer CNC-Achsen 24 in horizontaler Richtung rechtwinkelig zur Biegeebene 22 verstellbar sein, um ein großes Spektrum an Werkstückabmessungen abzudecken. Zusätzlich ist eine Verstellung des Fingerträgers 25 parallel zur Gesamtlänge 14 des Tischbalkens 4 möglich.

Der Anschlagfinger 19 ist für die Verstellbarkeit in horizontaler X-Achsrichtung 32 rechtwinkelig zur Biegeebene 22 an einer Führungsbahn 33 gelagert und wird dessen Verstellbewegung mittels der horizontalen CNC-Achse 24 in X-Achsrichtung 32 bewerkstelligt. Diese umfasst als Aktuator vorteilhafterweise ebenfalls einen Elektromotor, insbesondere einen Servomotor 34, der ebenfalls von der Steuereinrichtung 17, der Mess- und Regelschaltung 18 sowie der Positionssteuerung 31 angesteuert wird. Die Drehbewegung des Servomotors 34 wird beispielsweise mittels eines Zahnritzels 35 auf eine Zahnstangenanordnung 36 am Anschlagfinger 19 übertragen, wodurch exakte Positioniervorgänge in X-Achsrichtung 32 mit hoher Bewegungsdynamik ausgeführt werden können. Alternativ dazu können für die CNC-Achsen auch Kugelumlaufspindeln eingesetzt werden.

Die Steuereinrichtung 17 umfasst neben der Positionssteuerung 31 zusätzlich einen diese überlagernde Kraft-Regelkreis 37, mit dem zusätzlich zur Positionsregelung des Anschlagfingers 19 auch eine Regelung der auf diesen einwirkenden Verstellkräfte durchgeführt werden kann. Der Kraft-Regelkreis 37 ist in diesem Ausführungsbeispiel ein Teil einer Sensoranordnung 38, die im Fall einer bevorstehenden oder erfolgten Kollision des Anschlagfingers 19 mit einem Hindernis eine durch einen Rückzugantrieb bewirkte Rückzugbewegung des Anschlagfingers auslöst und deren Funktionsweise in Folge näher beschrieben wird.

Erfindungsgemäß wird bei einer Annäherungsbewegung 39 des Anschlagfingers 19 der Positionsregelung durch die Positionssteuerung 31 zusätzlich eine Kraftregelung durch den Kraft-Regelkreis 37 überlagert und wird der Anschlagfinger 19 vom Servomotor 34 in X-Richtung 32 verstellt, bis die Anschlagfläche 20 sich in der Anschlagposition 21 befindet. Sollte der Anschlagfinger 19 bei dieser Annäherungsbewegung 39, wie in strichlierten Linien dargestellt, auf ein Hindernis 40 treffen, das beispielsweise aus den Fingern einer Bedienperson bestehen kann, wird vom Kraft-Regelkreis 37 die Annäherungsbewegung 39 schnellstmöglich gestoppt und unverzüglich eine Rückzugbewegung 41 des Anschlagfingers 19 ausgelöst. Durch eine feinfühlige Kraftregelung können auch bei schnellen Annäherungsbewegungen 39 Stoß- oder Quetschverletzungen einer Bedienperson vermieden werden, da durch den hochdynamischen Antrieb mittels des Servomotors 34 und der limitierten Verstellkraft die auf ein Hindernis 40 wirkenden Kontaktkräfte bei einer unvorhergesehenen Kollision insgesamt niedrig gehalten werden können. Durch die Rückzugbewegung 41 kann sich eine Bedienperson beim reflexartigen Zurückziehen des kontaktierten Körperteils am Anschlagfinger 19 nicht verletzen.

Die Rückzugbewegung 41 wird durch die CNC-Achse 24 in X-Achsrichtung 32 mit dem Servomotor 34 bewerkstelligt, wodurch diese einen Rückzugantrieb 42 bildet. Gleichzeitig ist die CNC-Achse 24 in X-Achsrichtung 32 ein Teil der Sensoranordnung 38, mit der eine Kollision festgestellt werden kann, indem vom bei der Annäherungsbewegung 39 aktivierten Kraft-Regelkreis 37 ein unvorhergesehener Anstieg der erforderlichen Verstellkraft festgestellt wird und im Kollisionsfall von der Steuereinrichtung 17 der Rückzugantrieb 42 der CNC-Achse 24 in X-Achsrichtung 32 aktiviert wird.

Der Rückzugantrieb 42 kann weiters ein Zusatzantriebsmittel 43 umfassen, das auch durch den Kraft-Regelkreis 38 auslösbar ist und die Rückzugbewegung 41 des Anschlagfingers 19 bewirken kann. Das Zusatzantriebsmittel 43 kann dabei den Servomotor 34 unterstützen oder aber auch die Rückzugbewegung 41 statt diesem durchführen. Als Zusatzantriebsmittel 43 kann beispielsweise eine pyrotechnische Treibladung, eine vorgespannte, mechanische Feder oder eine vorgespannte Gasfeder dienen. Weiters ist es möglich, dass im Fall einer Rückzugbewegung 41 nicht der ganze Anschlagfinger 19 von der Biegeebene 22 wegbewegt wird, sondern nur der vordere Teil mit der Anschlagfläche 20, wodurch eine noch geringere Masse zurückgezogen werden muss, und die Bewegung daher noch schneller ablaufen kann.

Die Sensoranordnung 38 kann alternativ oder zusätzlich zum Kraft-Regelkreis 37 auch ein Sensorelement 44 umfassen, das am Anschlagfinger 19, insbesondere an dessen der Biegeebene 22 nächstliegenden Endabschnitt 45, angeordnet ist. Durch das Sensorelement 44 kann berührend oder berührungslos die Annäherung des Anschlagfingers 19 an ein Hindernis 40 erfasst werden und basierend darauf ebenfalls eine Rückzugbewegung 41 mittels des Rückzugantriebes ausgelöst werden.

Um die Dynamik der Rückzugbewegung zu steigern, ist es möglich die Rückzugbewegung des Anschlagfingers 19 auf dessen Endabschnitt 45 zu beschränken, wodurch eine geringere Masse zu beschleunigen ist, als wenn der gesamte Anschlagfinger gestoppt und in eine Rückzugbewegung versetzt werden muss.

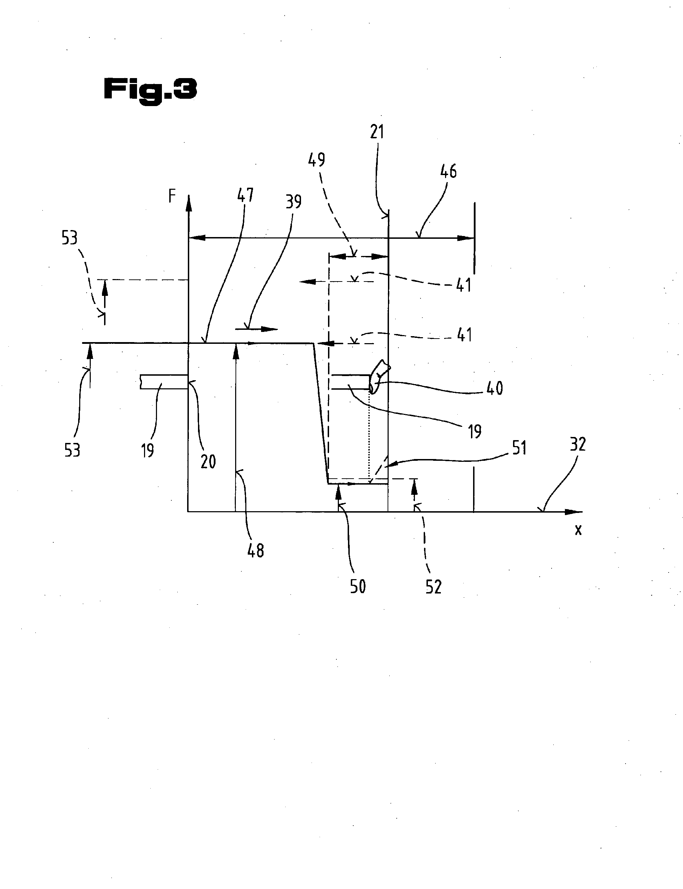

In Fig. 3 ist eine Ausführungsform des erfindungsgemäßen Verfahrens mit einer Sensoranordnung 38, die auf einem Kraft-Regelkreis 37 basiert, unter Verwendung eines Kraft-Weg-Diagrammes noch einmal näher erläutert.

In horizontaler Richtung ist dabei die Bewegung des Anschlagfingers in X-Achsrichtung 32 aufgetragen und vertikaler Richtung sind die dabei auf den Anschlagfinger 19 einwirkenden Verstellkräfte aufgetragen.

Der Anschlagfinger 19 kann mittels der CNC-Achse 24 in X-Achsrichtung 32 einen gewissen, von der Länge der Führung abhängigen Verstellbereich 46 abdecken, der beispielsweise zumindest 200 mm beträgt. Innerhalb des Verstellbereiches 46 liegt die anzufahrende Anschlagposition 21, in der ein Werkteil 3 gegen die Anschlagfläche 20 für einen Umformvorgang positioniert wird. Ausgehend von einer linken Ausgangsstellung des Anschlagfingers 19 nähert sich dieser in einer Annäherungsbewegung 39 an die Anschlagposition 21 an.

Während dieser Annäherungsbewegung 39 übt der Servomotor 34 auf den Anschlagfinger 19 eine Verstellkraft aus, die einem vorprogrammierten Verstellkraftverlauf 44 entspricht. Im ersten Teil der Annäherungsbewegung 39 ist die Verstellkraft beispielsweise sehr hoch gewählt und kann insbesondere der Nennkraft 48, die vom Servomotor 34 bereitgestellt werden kann, entsprechen und wird durch diese hohe Verstellkraft eine schnelle Verstellbewegung des Anschlagfingers 19 bewirkt. Wenn der Anschlagfinger 19 im weiteren Verlauf der Annäherungsbewegung 39 in einer bestimmten Distanz zur Anschlagposition 21 einen Annäherungsbereich 49 erreicht, wird die vom Servomotor 34 auf den Anschlagfinger 19 ausgeübte Verstellkraft auf eine relativ niedrige Annäherungskraft 50 abgesenkt, wobei diese Regelung durch den Kraft-Regelkreis 38 der Steuereinrichtung 17 durchgeführt wird.

Während der gesamten Annäherungsbewegung 39 oder aber auch nur innerhalb des Annäherungsbereiches 49 wird vom Kraft-Regelkreis 37 die erforderliche Verstellkraft überwacht, was dazu genutzt wird, eine Kollision mit einem unvorhergesehenen Hindernis 40 festzustellen. In diesem Fall wirkt neben der in der Führungsbahn 33 wirkenden und in Vorversuchen ermittelbaren Reibungskraft eine zusätzliche hemmende Kraft auf den Anschlagfinger 19, welche vom Kraft-Regelkreis 37 festgestellt werden kann und daraus die Kollision mit einem Hindernis 40 abgeleitet werden kann. In Fig. 3 ist der bei einer Kollision mit einem Hindernis 40 eintretende Kraftanstieg 51 angedeutet und sobald bei einer Annäherungsbewegung 39 die Verstellkraft über einen Auslösewert 52 ansteigt, wird dies als Kollision mit einem Hindernis 40 ausgewertet und unverzüglich eine Rückzugbewegung 41 eingeleitet.

Damit die Rückzugbewegung 41 möglichst schnell erfolgt, wird für diese eine möglichst hohe Rückzugskraft 53 aufgebracht, die beispielsweise der Nennkraft 48 entspricht. Durch Verwendung eines anhand von Fig. 2 beschriebenen Zusatzantriebsmittels 43 ist auch eine die Nennkraft 48 übersteigende Rückzugkraft 53 möglich.

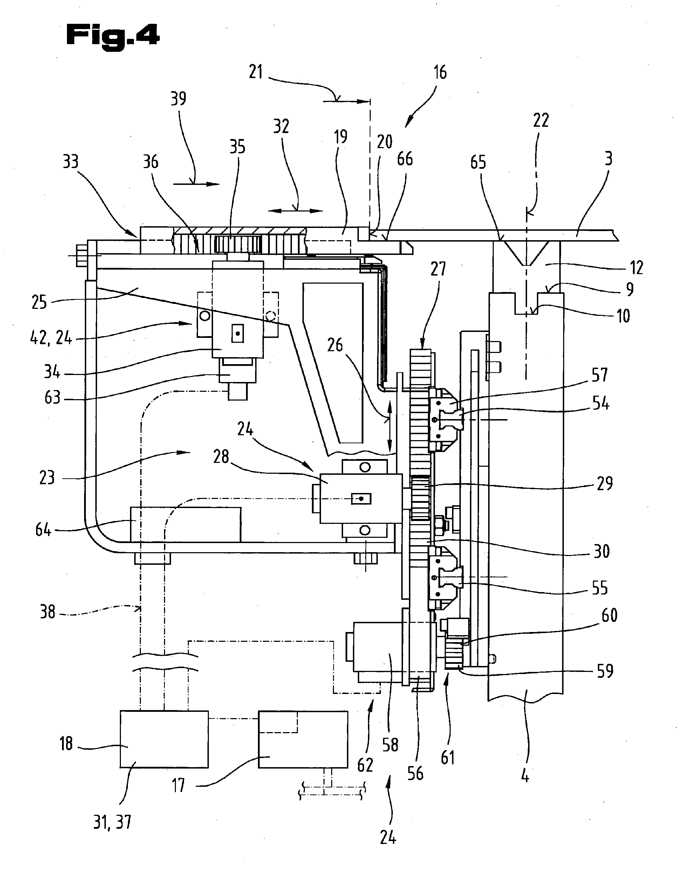

In Fig. 4 ist eine weitere Ausführungsform einer Anschlagvorrichtung 16 gezeigt, wobei Bauteile, die zuvor beschriebenen Bauteilen entsprechen mit denselben Bezugszeichen gekennzeichnet sind und auf die vorstehenden Beschreibungsteile Bezug genommen wird.

An der Rückseite des Tischbalkens 4 sind zwei Linearführungen 54, 55 angeordnet, welche zueinander in einem Abstand parallel zur Biegeebene 22 und in horizontaler Richtung verlaufen.

Im gezeigten Ausführungsbeispiel werden die Linearführungen 54, 55 durch leistenförmige Führungsprofile gebildet, wobei eine große Anzahl unterschiedlich ausgestalteter Profile aus dem Stand der Technik möglich sind und ist die Ausführung nicht auf das gezeigte Ausführungsbeispiel mit Gleitbahnführungen beschränkt.

Diese Linearführungen 54, 55 lagern verstellbar ein die Anschlagvorrichtung 16 tragendes Schlittenmodul 56 über an diesem vorgesehene, mit den Linearführungen 54, 55 zusammenwirkende Führungselemente 57 und ist die Anschlagvorrichtung 16 dadurch auch in Tischbalkenlängsrichtung, der sogenannten Z-Richtung verstellbar.

Eine Verstellung des Schlittenmoduls 56 längs den Linearführungen 54, 55 erfolgt mittels eines am Schlittenmodul 56 angeordneten, elektrischen Antriebsmittels 58, welches mit einem Zahnritzel 59 versehen ist und das in Eingriff steht mit einer Zahnleiste 60 die am Tischbalken 4 fixiert ist, wodurch ein Zahntrieb 61 als Antriebsanordnung 62 für eine Verstellung der Anschlagvorrichtung 16 in der Z- Achsrichtung, also in Tischbalkenlängsrichtung gebildet wird. Das elektrische Antriebsmittel 58 ist bevorzugt ein Servomotor und ist die Antriebsanordnung 62 als CNC-Positionierachse 24 konzipiert.

Am Schlittenmodul 56 ist der Fingerträger 25 in einer zur Z-Achsrichtung senkrecht verlaufenden R-Achsrichtung 26 in einer linearen Führungsbahn 27 verstellbar gelagert.

Dazu weist der Fingerträger 25 ein auf diesen angeordnetes, weiteres, elektrisches Antriebsmittel auf, welches mit einem Zahnritzel 29 mit einer linearen Zahnausbildung 30 am Schlittenmodul 56 in Antriebsverbindung ist und damit die CNC-Achse 24 der vertikalen R-Achsrichtung 26 der Anschlagvorrichtung 16 gebildet ist. Das elektrische Antriebsmittel ist durch einen Elektromotor 28, insbesondere einen Servomotor gebildet

Der Fingerträger 25 lagert an seiner Oberseite in einer linearen Führungsbahn 33 in zu einer Biegeebene 22 rechtwinkelig verlaufenden X-Achsrichtung 32 einen Anschlagfinger 19 verstellbar und bildet dieser Anschlagfinger 19 zumindest eine der Biegeebene 22 zugewandte Anschlagfläche 20 für das Positionieren des Werkteils 3 in Bezug auf die Biegeebene 22.

Eine CNC-Achse 24 für die horizontale X-Achsrichtung 32 für den Anschlagfinger 19 wird durch einen am Fingerträger 25 angeordneten, elektrisches Servomotor 34 gebildet, der mit einem Zahnritzel 35 mit einer linear verlaufenden Zahnstangenausbildung 36 des Anschlagfingers 19 in Antriebsverbindung ist. Der Servomotor 35 ist mit einem Drehgeber 63 und damit eine NC- Ansteuerung zur Verstellung des Anschlagfingers 19 in der X- Achsrichtung 32 erreicht.

Die Antriebsmittel 28, 34, 58 sind über Leitungen und eine Schnittstelle 64 mit der Steuervorrichtung 17 verbunden.

Die drei CNC-Achsen 24 für die Stellvorgänge der Anschlagvorrichtung 16 in den R-, X- und Z- Achsrichtungen sind NC- gesteuert ausgebildet und ist damit jede erforderlich Achse exakt positionierbar und jede Position und/oder Positionsänderung für weiterführende Steuer- und Regelmaßnahmen exakt erfassbar.

Nach dem gezeigten Ausführungsbeispiel bildet das Biegewerkzeug 12 eine Auflageebene 65 für den für einen Umformvorgang unmittelbaren Biegebereich des Werkteils 3 aus. Wie weiters zu sehen ist der Anschlagfinger 19 in seinem dem Biegewerkzeug 12 zugewandten Bereich abgestuft ausgebildet mit z.B. zwei in Verstellrichtung des Anschlagfingers 19 distanzierten Anschlagflächen 20.

Bei dünnen Werkteilen bietet die abgestufte Ausbildung die Möglichkeit der Auflage des freien, das Biegewerkzeug 12 überragenden Endbereiches des Werkteils 3 auf eine mit der Auflageebene 65 in fluchtende Ausrichtung gebrachten Stützfläche 66 des Anschlagfingers 19 aufzulegen.

Ein Positioniervorgang in X- Achsrichtung 32 erfolgt programmgesteuert, indem eine Annäherungsbewegung 39 in eine Anschlagposition 21 eingeleitet wird. Bei dieser Annäherungsbewegung des Anschlagfingers 19 wird der Servomotor 34 insbesondere in Abhängigkeit der Annäherung des Anschlagfinger 19 an die Anschlagposition 21 geschwindigkeits- und leistungsgeregelt angesteuert, wobei die weiteren Bewegungsabschnitte der Anschlagvorrichtung 16 und des Anschlagfingers 19, in denen keine Gefährdung einer Bedienperson möglich ist, bevorzugt unter Vollleistung und möglichst hohen Geschwindigkeiten vollzogen werden.

Dies erfolgt durch eine Drehzahlregelung des Servomotors 34 des Anschlagfingers 19 und Regelung des Motordrehmoments z.B. durch die dezentrale Mess- und Regelschaltung 18 mit der Positionssteuerung 31 und dem Kraft-Regelkreis 37 z.B. durch Regelung des Motorstromes des Servomotors 34. Es wird also bevorzugt sowohl die Annäherungsgeschwindigkeit des Anschlagfingers 19 an die Anschlagposition 21 wie auch die Antriebskraft bzw. die Verstellkraft geregelt, welche aus Sicherheitsgründen so gewählt ist, dass im Endbereich der Annäherung an die Anschlagposition 21, etwa ab kleiner 50 mm auf ein mögliches Hindernis eine Kontaktkraft ausgeübt wird, die 150 N nicht überschreiten soll.

Es soll noch erwähnt werden, dass die Kraftbegrenzung über die Motorstromregelung vorzugsweise nur in einem Annäherungsbereich 49 (siehe Fig. 3) an die Anschlagposition 21 aktiviert ist, und die übrigen Bewegungsabläufe bei hohen Stellgeschwindigkeiten, also bei Volllast zur Reduzierung der Nebenzeiten erfolgt.

Von Vorteil entsprechend dem konstruktiven Aufbau der Anschlagvorrichtung 16 ist dabei eine geringe, bewegte Masse des Anschlagfingers 19 gegenüber herkömmlichen Anschlagvorrichtungen die im Allgemeinen relativ hohe bewegte Massen aufweisen. Dementsprechend sind die Anschlagfinger 19, die unmittelbar angetrieben werden, bevorzugt aus leichten Materialien wie Aluminium, Kunststoff, GFK, CFK, etc. gebildet.

Dieser Verstellbewegung setzen die Anschlagfinger 19 durch entsprechende Leistungsansteuerung des Servomotors 34, bevorzugt durch eine von der Mess- und Regelschaltung 18 bzw. den Kraft-Regelkreis 37 bewirkte Motorstromregelung, einen in Abhängigkeit von System- und Werkteilparametern vorwählbaren und regelbaren Verstellwiderstand entgegen.

Dadurch wird eine Positionsregelung mit unterlegter Kraftregelung bei nahezu beliebiger Regelung des Verstellwiderstandes erreicht. Für die Annäherungsbewegung 39 wird dabei ein programmierter Verstellkraftverlauf 47 (siehe Fig. 3) angewendet und dessen Einhaltung überwacht. Berücksichtigt bei der Festlegung eines vorzugebenden Verstellwiderstandes werden neben Werkteilparameter auch Systemparameter dadurch berücksichtigt, dass die Systemparameter, insbesondere der Kraftbedarf, der für eine Verstellung der Anschlagfinger erforderlich ist und die internen Reibungskräfte berücksichtigt, durch Kalibrier- Verstellvorgänge ermittelt werden. Unter Berücksichtigung eines so ermittelten Basis- Kraftbedarfes kann der Verstellwiderstand, der vom Anschlagfinger 19 einer Verstellung in die Anschlagposition 21 entgegen gesetzt werden soll sehr feinfühlig entsprechend den Werkteilparametern geregelt werden.

Durch die erreichbare feinfühlige Regelung der Antriebsleistungen und damit von Verstellwiderständen der Antriebsanordnungen der Anschlagfinger können die wesentlichsten System- und Werkteilparameter wie Werkteilmasse, Festigkeit, Biegesteifigkeit, Systemreibung, Werkteil- Auflagereibung etc. beim Positioniervorgang des Werkteils 3 berücksichtigt werden und auch zu Fehlern Anlass gebende Systemschwingungen sowohl der Anschlagvorrichtung 16 beim Positioniervorgang unterdrückt werden.

Erfindungsgemäß wird bei einer Annäherungsbewegung 39 die anhand der Fig. 2 und 3 bereits beschriebene Überwachung auf Kollision mit einem Hindernis 40 durchgeführt und bei Bedarf eine Rückzugsbewegung 41 des Anschlagfingers 19 ausgelöst. Um unnötige Wiederholungen zu vermeiden, wird auf die vorstehende Beschreibung der Auslösung und Durchführung der Rückzugbewegung 41 verwiesen

Es soll jedoch noch darauf verwiesen werden, dass die Regelung der Anschlagvorrichtung 16 bzw. der Antriebsmittel 28, 34, 58 für sämtliche Achsrichtungen - bevorzugt der X- und Z-Achsrichtung - geschwindigkeits- und/oder drehmomentgeregelt bzw. verstellkraftgeregelt nach den vorhergehend beschriebenen Kriterien erfolgt oder erfolgen kann.

Die Ausführungsbeispiele zeigen mögliche Ausführungsvarianten einer Biegepresse zur Ausführung des erfindungsgemäßen Verfahrens, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Ordnung halber sei abschließend darauf hingewiesen, dass zum besseren Verständnis des Aufbaus der Biegepresse 1 diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1; 2; 3; 4 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

**Bezugszeichenaufstellung**

| | | | |
|---|---|---|---|
| 1 | Biegepresse | 26 | erste Antriebsanordnung |
| 2 | Abkantpresse | 27 | Elektromotor |
| 3 | Werkteil | 28 | Zahnritzel |
| 4 | Tischbalken | 29 | Zahnstangenanordnung |
| 5 | Aufstandsfläche | 30 | Positionssteuerung |
| | | | |
| 6 | Antriebsmittel | 31 | Positionssteuerung |
| 7 | Pressbalken | 32 | X-Achsrichtung |
| 8 | Stirnfläche | 33 | Führungsbahn |
| 9 | Stirnfläche | 34 | Servomotor |
| 10 | Werkzeugaufnahme | 35 | Zahnritzel |
| | | | |
| 11 | Biegewerkzeug | 36 | Zahnstangenanordnung |
| 12 | Biegewerkzeug | 37 | Kraft-Regelkreis |
| 13 | Werkzeugs atz | 38 | Sensoranordnung |
| 14 | Gesamtlänge | 39 | Annäherungsbewegung |
| 15 | Pressenraum | 40 | Hindernis |
| | | | |
| 16 | Anschlagvorrichtung | 41 | Rückzugbewegung |
| 17 | Steuereinrichtung | 42 | Rückzugantrieb |
| 18 | Mess- und Regelschaltung | 43 | Zu s atzantrieb smittel |
| 19 | Anschlagfinger | 44 | Sensorelement |
| 20 | Anschlagfläche | 45 | Endabschnitt |
| | | | |
| 21 | Anschlagposition | 46 | Verstellbereich |
| 22 | Biegeebene | 47 | Verstellkraftverlauf |
| 23 | Fingerträger | 48 | Nennkraft |
| 24 | R-Achsrichtung | 49 | Annäherungsbereich |
| 25 | Führungsbahn | 50 | Annäherungskraft |
| 51 | Kraftanstieg | | |
| 52 | Auslösewert | | |
| 53 | Rückzugkraft | | |
| 54 | Linearführung | | |
| 55 | Linearführung | | |
| | | | |
| 56 | Schlittenmodul | | |
| 57 | Führungselement | | |
| 58 | Antriebsmittel | | |
| 59 | Zahnritzel | | |
| 60 | Zahnleiste | | |
| | | | |
| 61 | Zahntrieb | | |
| 62 | Antriebsanordnung | | |
| 63 | Drehgeber | | |
| 64 | Schnittstelle | | |
| 65 | Auflageebene | | |
| | | | |
| 66 | Stützfläche | | |

## Patentansprüche

1. Verfahren zum Betrieb einer Biegepresse (1) mit einer Steuereinrichtung (17) und einer Anschlagvorrichtung (16) zum Positionieren eines Werkteils (3) für eine Biegeumformung zwischen einem ersten Biegewerkzeug (12) und einem relativ dazu verstellbaren zweiten Biegewerkzeug (11), bei dem zumindest ein Anschlagfinger (19) mit einer Anschlagfläche (20) mittels einer Antriebsanordnung (23) mit zumindest einer angetriebenen CNC-Achse (24) eine positionsgesteuerte Annäherungsbewegung (39) in Richtung zu einer vertikalen Biegeebene (22) in eine Anschlagposition (21) ausführt, **dadurch gekennzeichnet, dass** die Steuereinrichtung (17) einen Rückzugantrieb (42) aktiviert, der eine unverzügliche Rückzugbewegung (41) des Anschlagfingers (19) oder zumindest des der Biegeebene (22) nächstliegenden Endabschnitts (45) des Anschlagfingers (19) von der Biegeebene (22) weg bewirkt, wenn bei der Annäherungsbewegung (39) vor Erreichen der Anschlagposition (21) mittels einer von der Steuereinrichtung (17) umfassten Sensoranordnung (38) ein Hindernis (40) in der Bewegungsbahn des Anschlagfingers (19) erfasst wird.

2. Verfahren nach Anspruch 1 **dadurch gekennzeichnet, dass** die Rückzugbewegung (41) im Wesentlichen auf den Anschlagfinger (19) oder dessen Endabschnitt (45) beschränkt wird.

3. Verfahren nach Anspruch 1 oder 2, **dadurch gekennzeichnet, dass** für die Rückzugbewegung (41) eine den Anschlagfinger (19) in zur Biegeebene (22) rechtwinkeliger, horizontaler X-Achsrichtung (32) verstellende CNC-Achse (24) als Rückzugantrieb (42) wirksam wird.

4. Verfahren nach einem der Ansprüche 1 bis 3, **dadurch gekennzeichnet, dass** bei der Rückzugbewegung (41) ein Zusatzantriebsmittel (42) auf den Anschlagfinger (19) wirkt, das zusätzlich oder anstatt der zumindest einen CNC-Achse (24) aktiviert wird.

5. Verfahren nach einem der Ansprüche 1 bis 4, **dadurch gekennzeichnet, dass** das Hindernis (40) durch ein am Anschlagfinger (19) angeordnetes Sensorelement (44) der Sensoranordnung (38) in Form eines mechanisch betätigbaren Kontaktschalters, eines Kraftmesselements oder eines berührungslos wirkenden Näherungssensors erfasst wird.

6. Verfahren nach einem der Ansprüche 1 bis 5, **dadurch gekennzeichnet, dass** die Sensoranordnung zur Erfassung eines Hindernisses (40) während der Annäherungsbewegung (39) einen Kraft-Regelkreises (37) der Steuereinrichtung (17) umfasst, wobei die für die Verstellung des Anschlagfingers (19) ausgeübte Verstellkraft der zumindest einen CNC-Achse (24) nach einem vorprogrammierten Verstellkraftverlauf (47) geregelt wird und ein durch ein Hindernis (40) bewirkter Anstieg der Verstellkraft über einen programmierten Auslösewert (52) die Rückzugbewegung (41) auslöst.

7. Verfahren nach Anspruch 6, **dadurch gekennzeichnet, dass** der Auslösewert (52) so festgelegt wird, dass bei einem während der Annäherungsbewegung (39) auftretenden Kontakt des Anschlagfingers (19) mit dem Hindernis (40) auf dieses bis zum Beginn der Rückzugbewegung (41) vom Anschlagfinger (19) eine Maximalkraft von 150 N ausgeübt wird.

8. Verfahren nach Anspruch 6 oder 7, **dadurch gekennzeichnet, dass** außerhalb eines vorprogrammierten Annäherungsbereiches (49) der Kraft-Regelkreis (37) deaktiviert ist und die zumindest eine CNC-Achse (24) ohne Kraftregelung betrieben wird oder der Kraft-Regelkreis (37) einen höheren Auslösewert (52) verwendet als innerhalb des Annäherungsbereiches (49).

9. Verfahren nach Anspruch 8, **dadurch gekennzeichnet, dass** der Annäherungsbereich (49) in einem Abstand von minimal 50 mm zur Anschlagposition (21) oder zu einem in der Steuereinrichtung (17) hinterlegten, festen Gegenstand der Biegepresse (1) oder zu einem Bewegungsbahnabschnitt des Anschlagfingers (19) in dem sich ein Hindernis (40), insbesondere ein Körperteil einer Bedienperson oder auch ein Werkteil (3) befinden kann, beginnt.

10. Verfahren nach einem der Ansprüche 6 bis 9 **dadurch gekennzeichnet, dass** vom Kraft-Regelkreis (37) die am Antriebsmotor der zumindest einen CNC-Achse wirkende Stromstärke als Vergleichswert für die aktuell wirkende Verstellkraft benutzt wird.

11. Verfahren nach einem der vorhergehenden Ansprüche, **dadurch gekennzeichnet, dass** bei Auslösung einer Rückzugbewegung (41) die Bewegungsrichtung des Anschlagfingers (19) innerhalb einer der menschlichen Reaktionszeit bei Reflexbewegungen entsprechenden Zeitspanne, vorzugsweise innerhalb von 0,1 s, insbesondere 0,075 s umkehrt wird.

12. Verfahren nach Anspruch 11, **dadurch gekennzeichnet, dass** der Anschlagfinger (19) innerhalb der Zeitspanne einen Rückzugweg von mindestens 5 mm, insbesondere mindestens 10 mm, vorzugsweise mindestens 25 mm zurücklegt.

13. Biegepresse (1) umfassend eine Steuereinrichtung (17) und eine Anschlagvorrichtung (16) zum Positionieren eines Werkteils (3) für eine Biegeumformung zwischen einem ersten Biegewerkzeug (12) und einem relativ dazu verstellbaren zweiten Biegewerkzeug (11), wobei die Anschlagvorrichtung (16) zumindest einen, mittels zumindest einer angetriebenen CNC-Achse (24) in Richtung zu einer vertikalen Biegeebene (22) in eine Anschlagposition (21) verstellbaren Anschlagfinger (19) mit einer Anschlagfläche (20) umfasst, **dadurch gekennzeichnet, dass** die Steuereinrichtung (17) eine zumindest während einer Annäherungsbewegung (39) des Anschlagfingers (19) an die Biegeebene (22) aktivierbare Sensoranordnung (38) umfasst, die ein Hindernis (40) in der Bewegungsbahn des Anschlagfingers (19) erfassen kann und die Anschlagvorrichtung (16) einen von der Steuereinrichtung (17) bei Erfassung eines Hindernisses (40) aktivierbaren Rückzugantrieb (42) umfasst, mit dem der Anschlagfinger (19) oder zumindest ein der Biegeebene (22) nächstliegender Endabschnitt (45) des Anschlagfingers (19) unverzüglich von der Biegeebene (22) weg verstellbar ist.

14. Biegepresse (1) nach Anspruch 13, **dadurch gekennzeichnet, dass** die Sensoranordnung (38) einen am Anschlagfinger (19) angeordneten, mechanisch betätigbaren Kontaktschalter oder berührungslos wirkenden Näherungssensor umfasst.

15. Biegepresse (1) nach Anspruch 13, **dadurch gekennzeichnet, dass** die Sensoranordnung (38) zur Erfassung eines Hindernisses (40) während der Annäherungsbewegung (39) einen an der zumindest einen angetriebenen CNC-Achse (24) wirkenden Kraft-Regelkreis (37) der Steuereinrichtung (17) umfasst.

16. Biegepresse (1) nach einem der Ansprüche 13 bis 15, **dadurch gekennzeichnet, dass** der Rückzugantrieb (42) eine den Anschlagfinger (19) in zur Biegeebene (22) rechtwinkeliger, horizontaler X-Achsrichtung (32) verstellende CNC-Achse (24) umfasst.

17. Biegepresse (1) nach einem der Ansprüche 13 bis 16, **dadurch gekennzeichnet, dass** der Anschlagfinger (19) verstellbar an einem Fingerträger (25) gelagert ist und die in X-Achsrichtung (32) wirkende CNC-Achse (24) des Rückzugantriebes (42) am Fingerträger (25) angeordnet ist.

18. Biegepresse (1) nach Anspruch 16 oder 17, **dadurch gekennzeichnet, dass** die CNC-Achse (24) einen Aktuator, insbesondere einen elektrischen Antriebsmotor ausgewählt aus einer Gruppe umfassend Servomotor, Linearmotor umfasst.

19. Biegepresse (1) nach Anspruch 18, **dadurch gekennzeichnet, dass** der vom Antriebsmotor (35) abgedeckte Verstellbereich (43) des Anschlagfingers (19) zumindest 200 mm beträgt.

20. Biegepresse (1) nach einem der Ansprüche 13 bis 19, **dadurch gekennzeichnet, dass** der Rückzugantrieb (42) ein auf den Anschlagfinger (19) oder den Endabschnitt (45) wirkendes, von der Steuereinrichtung (17) aktivierbares Zusatzantriebsmittel (43) für die Rückzugbewegung (41) umfasst.

21. Biegepresse (1) nach Anspruch 20, **dadurch gekennzeichnet, dass** das Zusatzantriebsmittel (43) eine pyrotechnische Treibladung oder eine vorgespannte elastische Feder oder eine vorgespannte Gasfeder umfasst.

22. Biegepresse (1) nach einem der Ansprüche 13 bis 21, **dadurch gekennzeichnet, dass** der Rückzugantrieb (42) einen Rückzug des Anschlagfingers (19) um zumindest 25 mm innerhalb von 0,1 s bewirken kann.

23. Biegepresse (1) nach einem der Ansprüche 13 bis 22, **dadurch gekennzeichnet, dass** der Rückzugantrieb (42) für die Rückzugbewegung (41) eine von der Biegeebene (22) weg weisende Beschleunigung von zumindest 5 m/s², vorzugsweise zumindest 10 m/s², insbesondere zumindestl8 m/s² bewirken kann.

24. Biegepresse (1) nach einem der Ansprüche 13 bis 23, **dadurch gekennzeichnet, dass** der Rückzugantrieb (42) für den Anschlagfinger (19) ein mit einem Antriebsmotor (34) verbundenes Zahnritzel (35) und eine am Anschlagfinger (19) ausgebildete Zahnstangenanordnung (36) umfasst.

25. Biegepresse (1) nach einem der Ansprüche 13 bis 24, **dadurch gekennzeichnet, dass** der Anschlagfinger (19) oder der Endabschnitt (45) im Wesentlichen aus einem Leichtbaumaterial, insbesondere aus Leichtmetall, Kunststoff, GFK oder CFK etc., gebildet ist.

## Claims

1. Method for operating a bending press (1) having a control device (17) and a back gauge device (16) for positioning a workpiece (3) for a bending operation between a first bending tool (12) and a second bending tool (11) which can be adjusted relative to the first bending tool (12), wherein at least one stop finger (19) having a stop surface (20) performs a position-controlled approaching movement (39) in the direction of a vertical bending plane (22) by means of a drive assembly (23) having at least one driven CNC axis (24), **characterized in that** the control device (17) activates a retraction drive (42) which effects an immediate retraction movement (41) away from the bending plane (22) of the stop finger (19) or at least of that end section (45) of the stop finger (19) closest to the bending plane (22), if an obstacle (40) is detected in the movement path of the stop finger (19) by means of a sensor assembly (38) comprised by the control device (17) during the approaching movement (39) before the stop position (21) is reached.

2. Method according to claim 1, **characterized in that** the retraction movement (41) is substantially limited to the stop finger (19) or its end section (45).

3. Method according to claim 1 or 2, **characterized in that** a CNC axis (24) adjusting the stop finger (19) in a horizontal x axial direction (32), perpendicular to the bending plane is effective as retraction drive (42) for the retraction movement (41).

4. Method according to one of claims 1 to 3, **characterized in that** during the retraction movement (41) an additional drive means (42) which is activated in addition to or instead of the at least one CNC axis (24) acts on the stop finger (19).

5. Method according to one of claims 1 to 4, **characterized in that** the obstacle (40) is detected by a sensor element (44) of the sensor assembly (38) arranged on the stop finger (19), which sensor element (44) is provided in the form of a mechanically operated contact switch, a force measurement element or a contact-free proximity sensor.

6. Method according to one of claims 1 to 5, **characterized in that** the sensor assembly for detecting the obstacle (40) during the approaching movement (39) comprises a force-control loop (37) of the control device (17), and the adjustment force of the at least one CNC axis (24) exerted for adjusting the stop finger (19) is closed-loop controlled in accordance with a pre-programmed adjustment force profile (47) and the retraction movement (41) is triggered when an obstacle (40) causes the adjustment force to increase beyond a programmed trigger value (52).

7. Method according to claim 6, **characterized in that** the trigger value (52) is such determined that when there is a contact between the stop finger (19) and the obstacle (40) during the approaching movement (39), the stop finger (19) exerts a maximum force of 150 N on the obstacle (40) until the retraction movement (41) is initiated.

8. Method according to claim 6 or 7, **characterized in that** the force-control loop (37) beyond a pre-programmed approaching area (49)is deactivated and the at least one CNC axis (24) is operated without force control or the force-control loop (37) uses a higher trigger value (52) than within the approaching area (49).

9. Method according to claim 8, **characterized in that** the approaching area (49) starts at a distance of at least 50 mm to the stop position (21) or to a fixed object of the bending press (1) stored in the control device (17) or to a section of the movement path of the stop finger (19) inside which an obstacle (40), in particular a part of the body of an operator or also a workpiece (3), can be situated.

10. Method according to one of claims 6 to 9, **characterized in that** the force-control loop (37) uses the amperage acting on the drive motor of the at least one CNC axis as a reference value for the currently acting adjustment force.

11. Method according to one of the preceding claims, **characterized in that** when a retraction movement (41) is triggered, the direction of movement of the stop finger (19) is reversed within a period of time corresponding to the human reaction time in the case of a reflex movement, preferably within 0.1 s, in particular 0.075 s.

12. Method according to claim 11, **characterized in that** within the period of time the stop finger (19) covers a retraction path of at least 5 mm, in particular 10 mm, preferably at least 25 mm.

13. Bending press (1) comprising a control device (17) and a back gauge device (16) for positioning a workpiece (3) for a bending operation between a first bending tool (12) and a second bending tool (11) which can be adjusted relative to the first bending tool (12), and the back gauge device (16) comprises at least one stop finger (19) having a stop surface (20), which stop finger (19) can be adjusted into a stop position (21) in the direction towards a vertical bending plane (22) by means of at least one driven CNC axis (24), **characterized in that** the control device (17) comprises a sensor assembly (38) which can be activated at least during the approaching movement (39) of the stop finger (19) to the bending plane (22) and which can detect an obstacle (40) in the movement path of the stop finger (19) and the back gauge device (16) comprises a retraction drive (16) which can be activated then the control device (17) detects an obstacle (40), by means of which retraction device (42) the stop finger (19) or at least an end section (45) of the stop finger (19) closest to the bending plane (22) can be immediately displaced away from the bending plane (22).

14. Bending press (1) according to claim 13, **characterized in that** the sensor assembly (38) comprises a mechanically operated contact switch or a contact-free proximity sensor arranged on the stop finger (19).

15. Bending press (1) according to claim 13, **characterized in that** for detecting an obstacle (40) during the approaching movement (39) the sensor assembly (38) comprises a force-control loop (37) of the control device (17) acting on the at least one driven CNC axis (24).

16. Bending press (1) according to one of claims 13 to 15, **characterized in that** the retraction drive (42) comprises a CNC axis adjusting the stop finger (19) in a horizontal x axial direction (32), perpendicular to the bending plane (22).

17. Bending press (1) according to one of claims 13 to 16, **characterized in that** the stop finger (19) is mounted at a finger carrier (25) so as to be adjustable and the CNC axis (24) of the retraction drive (42) active in x axial direction (32) is arranged on the finger carrier (25).

18. Bending press according to claim 16 or 17, **characterized in that** the CNC axis (24) comprises an actuator, in particular an electric drive motor selected from a group comprising servomotor, linear motor.

19. Bending press (1) according to claim 18, **characterized in that** the adjustment range (43) of the stop finger (19) covered by the drive motor (35) is at least 200 mm.

20. Bending press (1) according to one of claims 13 to 19, **characterized in that** the retraction drive (42) comprises an additional drive means (43) for the retraction movement (41) which acts on the stop finger (19) or the end section (45) and can be activated by the control device (17).

21. Bending press (1) according to claim 20, **characterized in that** the additional drive means (43) comprises a pyrotechnic charge or a pre-tensioned elastic spring or a pre-tensioned gas spring.

22. Bending press (1) according to one of claims 13 to 21, **characterized in that** the retraction drive (42) can cause the stop finger (19) to retract by at least 25 mm within 0.1 s.

23. Bending press (1) according to one of claims 13 to 22, **characterized in that** the retraction drive (42) for the retraction movement (41) can cause acceleration of at least 5m/s², preferably at least 10 m/s², in particular at least 18m/s², pointing away from the bending plane (22).

24. Bending press (1) according to one of claims 13 to 23, **characterized in that** the retraction drive (42) for the stop finger (19) comprises a pinion (35) connected with a drive motor (34) and a gear rod arrangement (36) formed on the stop finger (19).

25. Bending press (1) according to one of claims 13 to 24, **characterized in that** the stop finger (19) or the end section (45) is substantially formed from a lightweight material, in particular from lightweight metal, plastic material, GFK or CFK, etc.

## Revendications

1. Procédé de fonctionnement d'une presse plieuse (1) avec un dispositif de commande (17) et un dispositif de butée (16) pour positionner une pièce (3) en vue d'un reformage par pliage entre un premier outil de pliage (12) et un second outil de pliage (11) qui est déplaçable par rapport au premier et dont au moins un doigt de butée (19) avec une surface de butée (20) effectue, à l'aide d'un agencement d'entraînement (23) avec au moins un axe CNC motorisé (24), un mouvement de rapprochement (39) commandé par positions vers un plan de pliage vertical (22) jusque dans une position de butée (21), **caractérisé en ce que** le dispositif de commande (17) active un entraînement en retrait (42) qui déclenche un mouvement en retrait immédiat (41) du doigt de butée (19) ou pour le moins de la partie d'extrémité (45) du doigt de butée (19) qui est la plus proche du plan de pliage (22), en éloignement du plan de pliage (22), lorsque, lors du mouvement de rapprochement (39), avant l'atteinte de la position de butée (21), un obstacle (40) situé sur le parcourt du doigt de butée (19) est capté par un agencement de capteur (38) faisant partie du dispositif de commande (17).

2. Procédé selon la revendication 1, **caractérisé en ce que** le mouvement en retrait (41) est essentiellement limité au doigt de butée (19) ou à la partie d'extrémité (45) de celui-ci.

3. Procédé selon la revendication 1 ou 2, **caractérisé en ce que**, pour le mouvement en retrait (41), un axe CNC (24) déplaçant le doigt de butée (19) dans une direction X horizontale (32) perpendiculaire au plan de pliage (22) agit comme entraînement en retrait (42).

4. Procédé selon l'une des revendications 1 à 3, **caractérisé en ce que**, lors du mouvement en retrait (41), un moyen d'entraînement supplémentaire (43) agit sur le doigt de butée (19), lequel moyen est activé en plus ou au lieu de l'au moins un axe CNC (24).

5. Procédé selon l'une des revendications 1 à 4, **caractérisé en ce que** l'obstacle (40) est capté par un élément capteur (44) de l'agencement de capteur (38) disposé au doigt de butée (19) et se présentant sous la forme d'un contacteur mécanique, d'un élément mesurant l'effort ou d'un capteur de proximité fonctionnant sans contact physique.

6. Procédé selon l'une des revendications 1 à 5, **caractérisé en ce que** l'agencement de capteur pour capter un obstacle (40) pendant le mouvement d'approche (39) comprend un circuit de régulation d'effort (37) du dispositif de commande (17), l'effort de déplacement de l'au moins un axe CNC (24) appliqué pour le déplacement du doigt de butée (19) étant régulé selon un diagramme d'effort de déplacement préprogrammé (47), et une augmentation de l'effort de déplacement, au-delà d'une valeur de déclenchement programmée (52), causée par un obstacle (40), déclenchant le mouvement en retrait (41).

7. Procédé selon la revendication 6, **caractérisé en ce que** la valeur de déclenchement (52) est déterminée de façon que, lors d'un contact du doigt de butée (19) avec l'obstacle (40) pendant le mouvement de rapprochement (39), un effort maximal de 150 N est exercé sur l'obstacle jusqu'au début du mouvement en retrait (41) du doigt de butée (19).

8. Procédé selon la revendication 6 ou 7, **caractérisé en ce que** le circuit de régulation d'effort (37) est désactivé en dehors d'une zone de rapprochement préprogrammée (49) et **en ce que** le au moins un axe CNC (24) est entraîné sans régulation d'effort ou le circuit de régulation d'effort (37) utilise une valeur de déclenchement (52) plus élevée qu'à l'intérieur de la zone de rapprochement (49).

9. Procédé selon la revendication 8, **caractérisé en ce que** la zone de rapprochement (49) commence à une distance d'au moins 50 mm de la position de butée (21) ou d'un objet solide de la presse plieuse (1) disposé dans le dispositif de commande (17) ou d'un tronçon du parcourt du doigt de butée (19) sur lequel un obstacle (40), notamment une partie du corps de l'opérateur de la presse ou une pièce (3) peut se trouver.

10. Procédé selon l'une des revendications 6 à 9, **caractérisé en ce que** le courant du moteur d'entraînement du au moins un axe CNC est utilisé par le circuit de régulation d'effort (37) comme valeur de comparaison pour l'effort de déplacement agissant actuellement.

11. Procédé selon l'une des revendications précédentes, **caractérisé en ce que**, lors du déclenchement d'un mouvement en retrait (41), la direction de mouvement du doigt de butée (19) est inversée dans un lapse de temps correspondant au temps de réaction humaine lors de mouvements en réflexe, de préférence dans 0,1 s, plus particulièrement dans 0,075 s.

12. Procédé selon la revendication 11, **caractérisé en ce que** le doigt de butée (19) parcourt pendant ce lapse de temps un chemin en retrait d'au moins 5 mm, notamment d'au moins 10 mm, de préférence d'au moins 25 mm.

13. Presse plieuse (1) comprenant un dispositif de commande (17) et un dispositif de butée (16) pour positionner une pièce (3) en vue d'un reformage par pliage entre un premier outil de pliage (12) et un second outil de pliage (11) qui est déplaçable par rapport au premier, le dispositif de butée (16) comprenant au moins un doigt de butée (19) avec une surface de butée (20) qui est déplaçable à l'aide d'au moins un axe CNC motorisé (24) en direction d'un plan de pliage vertical (22) jusque dans une position de butée (21), **caractérisée en ce que** le dispositif de commande (17) comprend un agencement de capteur (38) qui peut être activé au moins pendant un mouvement de rapprochement (39) du doigt de butée (19) vers le plan de pliage (22) et qui peut capter un obstacle (40) situé sur le parcourt du doigt de butée (19) et **en ce que** le dispositif de butée (16) comprend un entraînement en retrait (42) qui est activable par le dispositif de commande (17) lorsqu'il capte un obstacle (40) et avec lequel le doigt de butée (19) ou au moins une partie d'extrémité (45) qui est la plus proche du plan de pliage (22) est immédiatement déplaçable du plan de pliage (22).

14. Presse plieuse (1) selon la revendication 13, **caractérisée en ce que** l'agencement de capteur (38) comprend un contacteur mécanique ou un capteur de proximité fonctionnant sans contact physique, disposé au doigt de butée (19).

15. Presse plieuse (1) selon la revendication 13, **caractérisée en ce que** l'agencement de capteur (38) pour capter un obstacle (40) pendant le mouvement d'approche (39) comprend un circuit de régulation d'effort (37) du dispositif de commande (17) qui agit sur le au moins un axe CNC (24) motorisé.

16. Presse plieuse (1) selon l'une des revendications 13 à 15, **caractérisée en ce que** l'entraînement en retrait (42) comprend un axe CNC (24) déplaçant le doigt de butée (19) dans une direction X horizontale (32) perpendiculaire au plan de pliage (22).

17. Presse plieuse (1) selon l'une des revendications 13 à 16, **caractérisée en ce que** le doigt de butée (19) est monté déplaçable sur un support de doigt (25) et **en ce que** l'axe CNC (24) de l'entraînement en retrait (42), agissant dans la direction X (32), est disposé au support de doigt (25).

18. Presse plieuse (1) selon la revendication 16 ou 17, **caractérisée en ce que** l'axe CNC (24) comprend un actionneur, notamment un moteur d'entraînement électrique choisi dans un groupe comportant servomoteur et moteur linéaire.

19. Presse plieuse (1) selon la revendication 18, **caractérisée en ce que** la plage de déplacement du doigt de butée (19) couvert par le moteur d'entraînement (35) est d'au moins 200 mm.

20. Presse plieuse (1) selon l'une des revendications 13 à 19, **caractérisée en ce que** l'entraînement en retrait (42) comprend un moyen d'entraînement supplémentaire (43) pour le mouvement en retrait (41) agissant sur le doigt de butée (19) ou la partie d'extrémité (45), lequel moyen étant activable par le dispositif de commande (17).

21. Presse plieuse (1) selon la revendication 20, **caractérisée en ce que** le moyen d'entraînement supplémentaire (43) comprend une charge pyrotechnique ou un ressort élastique précontraint ou un ressort à gaz précontraint.

22. Presse plieuse (1) selon l'une des revendications 13 à 21, **caractérisée en ce que** l'entraînement en retrait (42) peut effectuer un retrait du doigt de butée (19) d'au moins 25 mm en 0,1 s.

23. Presse plieuse (1) selon l'une des revendications 13 à 22, **caractérisée en ce que** l'entraînement en retrait (42) pour le mouvement en retrait (41) présente une accélération orientée en éloignement du plan de pliage (22) d'au moins 5 m/s², de préférence d'au moins 10 m/s², notamment d'au moins 18 m/s².

24. Presse plieuse (1) selon l'une des revendications 13 à 23, **caractérisée en ce que** l'entraînement en retrait (42) pour le doigt de butée (19) comprend un pignon (35) relié au moteur d'entraînement (34) et un agencement de crémaillère (36) formé au doigt de butée (19).

25. Presse plieuse (1) selon l'une des revendications 13 à 24, **caractérisée en ce que** le doigt de butée (19) ou la partie d'extrémité (45) est formé essentiellement en un matériau léger, notamment en métal léger, en matière plastique, GFK ou CFK etc.
